# EUROPEAN PATENT APPLICATION

(11) **EP 3 168 591 A1**
(43) Date of publication of application: **17.05.2017**
(21) Application number: 16199042.9
(22) Date of filing: 16.11.2016
(51) Int. Cl.: G01M 11/08, G01M 15/14, G01B 11/16

(54) **SYSTEMS AND METHODS FOR MONITORING COMPONENTS**

(30) Priority: 16.11.2015 US 201514942060
(71) Applicant: General Electric Company, Schenectady, NY 12345 (US)
(72) Inventor: HOVIS, Gregory Lee, Greenville, SC 29615 (US); BATZINGER, Thomas James, Niskayuna, NY 12309 (US); RANSON, William F., Greenville, SC 29615 (US)
(74) Representative: Pöpper, Evamaria

(57) **Abstract**

Systems (150) and methods (200) for monitoring components (10) the component (10) comprising an exterior surface (11) are provided. A method (200) includes projecting structured light (146) onto a predetermined location (148) on the exterior surface (11) of the component (10). The structured light (146) is emitted from a structured light emitter (142). The method (200) further includes detecting the structured light (146) after the structured light (146) is reflected by the exterior surface (11). The method (200) further includes calculating at least one characteristic of the detected structured light (146).

## Description

### FIELD OF THE INVENTION

The present disclosure relates generally to systems and methods for monitoring components, and in particular to systems and methods which provide non-contact monitoring.

### BACKGROUND OF THE INVENTION

Throughout various industrial applications, apparatus components are subjected to numerous extreme conditions (e.g., high temperatures, high pressures, large stress loads, etc.). Over time, an apparatus's individual components may suffer creep and/or deformation that may reduce the component's usable life. Such concerns might apply, for instance, to some turbomachines.

Turbomachines are widely utilized in fields such as power generation and aircraft engines. For example, a conventional gas turbine system includes a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of a turbomachine, various components (collectively known as turbine components) within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

Accordingly, components may be monitored for creep. One approach to monitoring components for creep is to configure strain sensors on the components, and analyze the strain sensors at various intervals to monitor for deformations associated with creep strain. While such approaches are useful and accurate, one drawback is the labor and cost associated with applying the strain sensors to the components. Further, such analysis in some cases can only be performed by removing the components from an associated assembly, such as a turbomachine, for analysis.

The need for improved component monitoring is not limited to stain sensor applications. Such need exists in other component applications. For example, improved monitoring of cooling holes defined in the exterior surface of a component and/or other surface features configured on the exterior surface of a component may be useful.

Accordingly, alternative systems and methods for monitoring components are desired in the art. In particular, system and methods which provide accurate measurements while not requiring contact with or component mounting on the components, and which can be performed without requiring component removal from an associated assembly, would be advantageous.

### BRIEF DESCRIPTION OF THE INVENTION

Aspects and advantages of the invention will be set forth in part in the following description, or may be obvious from the description, or may be learned through practice of the invention.

In accordance with one embodiment of the present disclosure, a method for monitoring a component is provided. The component has an exterior surface. The method includes projecting structured light onto a predetermined location on the exterior surface of the component. The structured light is emitted from a structured light emitter. The method further includes detecting the structured light after the structured light is reflected by the exterior surface. The method further includes calculating at least one characteristic of the detected structured light.

In accordance with another embodiment of the present disclosure, a system for monitoring a component is provided. The component has an exterior surface. The system includes a data acquisition device, the data acquisition device including a structured light emitter and a detector. The data acquisition device is configured for projecting structured light onto a predetermined location on the exterior surface of the component, and detecting the structured light after the structured light is reflected by the exterior surface. The system further includes a computing device in operable communication with the data acquisition device, the computing device configured for calculating at least one characteristic of the detected structured light.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a side partial cross-sectional view of a gas turbine in accordance with one or more embodiments of the present disclosure;
FIG. 2 is a cross-sectional view of a portion of a gas turbine in accordance with one or more embodiments of the present disclosure;
FIG. 3 illustrates a system for monitoring a component during analysis of a component at a first time in accordance with one or more embodiments of the present disclosure;
FIG. 4 illustrates a system for monitoring a component during analysis of a component at a first time in accordance with one or more embodiments of the present disclosure; and
FIG. 5 is a flow chart illustrating a method for monitoring components in accordance with one or more embodiments of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

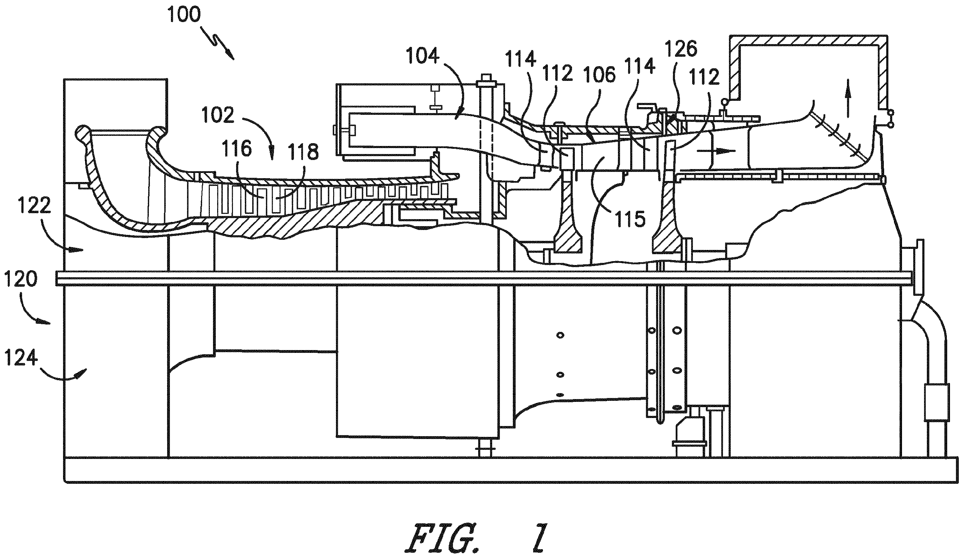

Referring now to FIG. 1, one embodiment of a turbomachine is illustrated. Components as discussed herein may be disposed within the turbomachine for operation within the turbomachine. In the embodiment shown, the turbomachine is a gas turbine 100, although in other embodiments the turbomachine may be a steam turbine or other suitable turbomachine. As shown, gas turbine 100 may include a compressor section 102, a combustor section 104, and a turbine section 106. Generally, the compressor section 102 provides a flow of pressurized air to the combustor section 104 wherein the pressurized air is mixed with fuel and the mixture combusted to generate a working fluid or hot gas stream. The working fluid is flowed through the turbine section 106, causing rotation of various rotatable components within the turbine section 106, which in turn drives the compressor section 102 (and rotation of various rotatable components thereof). As shown, the turbine section 106 includes one or more stages of rotor blades 112 and stator vanes 114 which extend radially across a hot gas stream flow annulus 115. Compressor section 102 additionally includes one or more stages of rotor blades 116 and stator vanes 118. A casing 120 extends around and encloses the compressor section 102, combustor section 104 and turbine section 106. As illustrated, the casing 120 may be formed from two or more sections. In the embodiment shown, the casing includes a first shell 122 and a second shell 124 which form the casing 120.

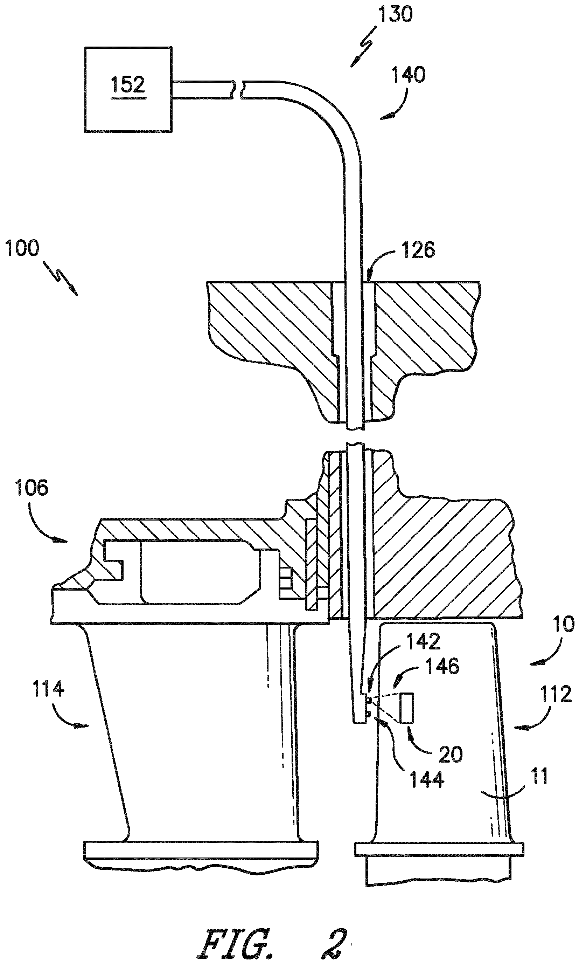

The casing 120 may include defined therein one or more access ports 126 (see also FIG. 2), which may for example be utilized to permit periodic inspection of components of the gas turbine 100 disposed internally of the casing 120 using, for example, a borescope. As is generally understood, during operation of the gas turbine each of the ports 126 is closed by a suitable plug.

Referring now to FIG. 2 a data acquisition device 140 may at least partially extend through an access port 126 of the gas turbine casing 120 for inspection of components of the gas turbine 100. Data acquisition device 140 may generally be utilized for component analysis, as discussed herein. A data acquisition device 140 may, for example, include a structured light emitter 142 and a detector 144, as discussed herein. When the data acquisition device 140 at least partially extends through an access port 126, the emitter 142 and detector 144 may be disposed within the interior of the turbomachine and may be spaced from rotating components of the turbomachine such as rotor blades 112, 116. In alternative embodiments, data acquisition device 140 may be disposed within the turbomachine and need not extend through an access port 126. For example, a data acquisition device 140 may be mounted to a stationary component of the turbomachine such as a stator vane 114, 118, a casing component, a shroud component, etc.

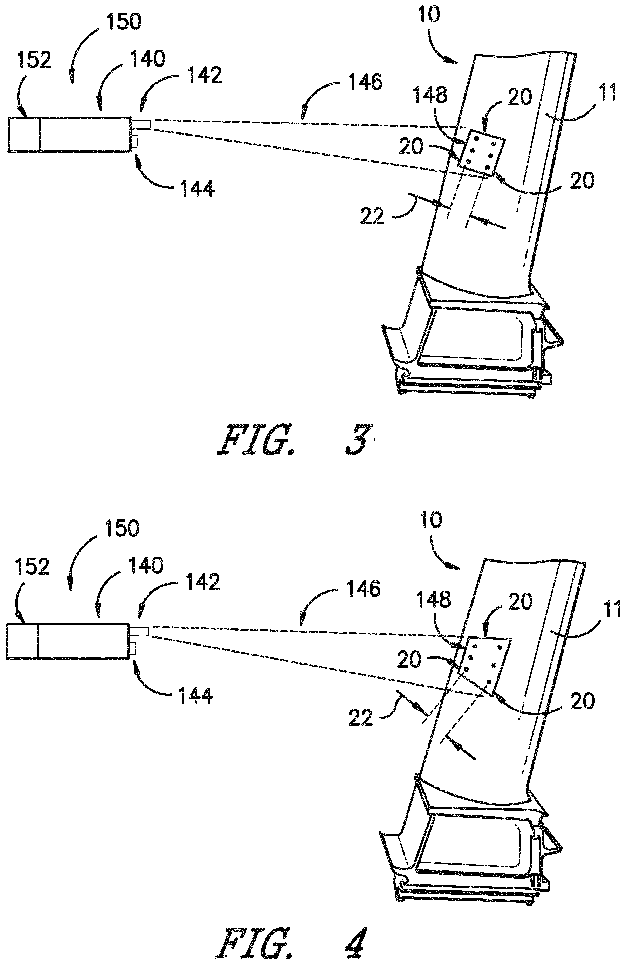

Data acquisition device 140 may be a component of a system 150 (see also FIG. 3) for monitoring components. The system 150 may further include, for example, a computing device 152. Computing device 152 may generally include suitable hardware and/or software for storing and analyzing data from the data acquisition device 140. Such hardware and/or software may, for example, generally analyze such data to determine whether component deformation and strain have occurred.

Computing device 152 may include one or more processor(s) and associated memory device(s) configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) may generally be configured to store suitable computer-readable instructions that, when implemented by the processor(s), configure the computing device 152 to perform various functions as discussed herein.

Notably, analysis of a component (such as a rotor blade 112, 116 or other suitable component as discussed herein) by a system 150 may, in some embodiments, be performed when the component is in situ. A component is in situ when it disposed within an assembly, such as a turbomachine, such as within a section 102, 104, 106 of the gas turbine 100. Notably, in some embodiments the entire casing 120 may surround the component 10 when such in situ analysis is occurring. In these embodiments, analysis may occur via extension of a portion of the system 150 (and data acquisition device 140 thereof) through a port 126 and/or via at least a portion of the system 150 (and data acquisition device 140 thereof) being disposed within the turbomachine. In other embodiments, a portion of the casing 120, such as the first shell 122 or second shell 124, may be removed. Alternatively, the component may be removed from the assembly, such as the turbomachine, for analysis, and may for example be positioned in a measurement jig for analysis.

FIGS. 3 and 4 illustrate embodiments of a system 150 during analysis of a component 10. Notably, the analysis in FIGS. 3 and 4 are shown as occurring at different times during the life of the component 10. The embodiment of FIG. 3, for example, may illustrate a component 10 analysis occurring at a first time, which may for example be before the component 10 is positioned within a turbomachine for operation of the turbomachine and rotation or other suitable movement of the component 10. Alternatively, the analysis at the first time may occur during operation or after a period of operation. The embodiment of FIG. 4, for example, may illustrate a component 10 analysis occurring at a second time which is different from and after the first time. The analysis at the second time may for example occur during operation or after a period of operation.

A component 10 (and more specifically the substrate of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications). As shown, the component 10 has an exterior surface 11.

As discussed, data acquisition device 140 includes a structured light emitter 142 and a detector 144. The emitter 142 generally emits structured light 146 therefrom. As is generally understood, structured light is light emitted in a predetermined pattern and projected onto a target surface in this pattern. The structured light 146 may, for example, be projected onto one or more predetermined locations (or regions) 148 on the exterior surface 11 of the component 10.

A predetermined location 148 on the exterior surface 11 may, for example, be a location at which monitoring is desired. For example, as discussed above, the component 10 may be a blade, vane, nozzle, shroud, rotor, transition piece or casing. In such embodiments, the predetermined location may be a location known to experience various forces during turbomachine operation such as on or proximate airfoils, platforms, tips or any other suitable location. Moreover, a predetermined location may be a location known to experience elevated temperatures. For example, a predetermined location may be in a hot gas path and/or on a combustion component 10.

The structured light 146 projected onto the exterior surface 11 and in the predetermined location 148 may include one or more structured light fiducials 20. The fiducials 20 can be utilized to measure one or more characteristics of the structured light that is projected onto the exterior surface 11 and in the predetermined location, as discussed herein. For example, in some embodiments, a characteristic may be a distance 22 between two fiducials 20. Fiducials 20 may, for example, be projected on the exterior surface 11 at a variety of distances and in a variety of locations with a predetermined location. Additionally or alternatively, a characteristic may be a shape of a fiducial 20 or plurality of fiducials 20. Measurement of a shape may include, for example measurement of an area of the shape or various dimensions of the shape such as a length, width, etc. As should be appreciated to those skilled in the art, these measurements can help determine the amount of strain, strain rate, creep, fatigue, stress, etc. at the region of the predetermined location of the component 10.

The structured light that is emitted from emitter 142 may be reflected by the exterior surface 11 of the component 10. Detector 144 may detect the structured light after the structured light is reflected by the exterior surface 11. Data received by the detector 144 may then be transmitted to the computing device 152 for analysis thereof.

Any suitable light may be utilized as structured light in accordance with the present disclosure. For example, in some embodiments, the structured light may be laser light. Data acquisition device 140 may, for example, be a laser scanner. Laser scanners generally include lasers (one embodiment of an emitter 142) which emit light in the form of laser beams towards objects, such as in these embodiments components 10 generally. The light is then detected by a sensor (one embodiment of a detector 144) of the device 140. For example, in some embodiments, the light is then reflected off of surfaces which it contacts, and received by a sensor of the device 140. The round-trip time for the light to reach the sensor is utilized to determine measurements along the various axes. These devices are typically known as time-of-flight devices. In other embodiments, the sensor detects the light on the surface which it contacts, and determines measurements based on the relative location of the light in the field-of-view of the sensor. These devices are typically known as triangulation devices.

In other embodiments, the structured light may be blue light or white light. Data acquisition device 140 may, for example, be a structured light scanner. Structured light scanners generally emit light from included light-emitting diodes or other suitable light generating apparatus (embodiments of an emitter 142). In exemplary embodiments, the emitted light utilized by a structured light scanner is blue light or white light. In general, the emitted light is projected onto the component 10 generally in a particular pattern as discussed above. When the light contacts the exterior surface 11, the surface contour distorts the light. A digital representation of this distortion is captured in an image taken by a camera (one embodiment of a detector 144).

In some embodiments, data acquisition device 140 may be configured for detecting the structured light repeatedly at a predetermined interval. Detection at a predetermined interval may, for example, occur when the component 10 is in situ during monitoring thereof, such as when monitoring of the component 10 is occurring during operation of the associated assembly and thus rotation of the component 10. For example, in exemplary embodiments, the predetermined interval may correspond to (and thus be equal or approximately equal to) the rotational frequency of the component 10. This causes the detection to occur when the component 10 is in an identical or approximately identical position at each interval. In some embodiments, the rotational frequency may be between 3000 revolutions per minute and 5000 revolutions per minute, such as between 3500 revolutions per minute and 4500 revolutions per minute.

As discussed, system 150 may include a computing device 152 which is in communication with the data acquisition device 140. Data received by the data acquisition device 140 due to detection of reflected structure light by the data acquisition device 140 (such as images, laser data, etc.) may be communicated to the computing device 152 for analysis thereby. For example, the computing device 152 may be configured for calculating one or more characteristics of the detected structured light. As discussed, a characteristic may be a distance 22 between a first structured light fiducial 20 and a second structured light fiducial 20, or may be a shape of a structured light fiducial 20, or may be another suitable characteristic that may be utilized for deformation analysis.

Further, as discussed, analysis of a component 10 may occur at different times, such as at a first and second time (which may in some embodiments be the times of separate analyses that occur at a predetermined interval as discussed). Data based on the detected structured light at each time may be transmitted to the computing device 152. The computing device may, after calculating one or more characteristics of the detected structured light at each time, compare like characteristics from each time to determine if deformation within the analyzed predetermined location has occurred. Specifically, as illustrated in FIGS. 3 and 4, a characteristic may change between a first time and a second time. Such change may be caused by contour of the exterior surface 11 changing, thus causing the structured light 146 to be reflected in a different manner. This may indicate that deformation is occurring to the component 10 at the predetermined location 148 wherein the structured light 146 is being reflected. Accordingly, a change in a characteristic can be utilized to monitor component 10 deformation.

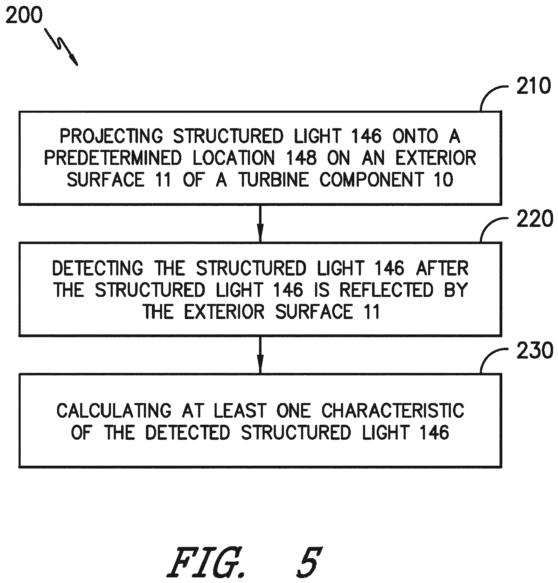

Referring now to FIG. 5, the present disclosure is further directed to methods 200 for monitoring components 10. In exemplary embodiments, the various steps of methods 200 as discussed herein may, for example, be performed by a system 150 as discussed herein. A method may include, for example, the step 210 of projecting structured light 146 onto one or more predetermined location 148 on the exterior surface 11 of a component 10, as discussed herein. As discussed, any light suitable for use as structured light may be utilized, such as laser light, white light, blue light, etc.

A method 200 may further include, for example, the step 220 of detecting the structured light 146 after the light 146 is reflected by the exterior surface 11, as discussed herein. In some embodiments, the steps 210, 220 may be performed with the component 10 in situ, as discussed herein. Alternatively, the steps 210, 220 may be performed with the component 10 ex situ, and thus for example, removed from an associated assembly, as discussed herein.

Further, in some embodiments when the steps 210, 220 are performed in situ, the steps 210, 220 may be performed during rotation of the component 10 as discussed herein. For example, the step 220 (and, optionally the step 210) may be performed repeatedly at a predetermined interval, as discussed herein.

A method 200 may further include, for example, the step 230 of calculating at least one characteristic of the detected structured light 146, as discussed herein.

Further, method 200 may include the step of comparing like characteristics calculated at different times, such as at a first and second time, as discussed herein. Such comparison may be utilized to determine if deformation has occurred.

Use of systems 150 and methods 200 in accordance with the present disclosure allows for non-contact deformation monitoring, which can reduce the labor and cost associated with deformation monitoring. Further, use of systems 150 and methods 200 in accordance with the present disclosure allows for such monitoring to be performed in situ and, in some embodiments, during rotation of the components 10. A particular feature of monitoring during rotation is that both plastic and elastic deformation can be analyzed and monitored, thus facilitating improved life cycle monitoring and other such monitoring of the components 10.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A method for monitoring a component, the component having an exterior surface, the method comprising:
   projecting structured light onto a predetermined location on the exterior surface of the component, the structured light emitted from a structured light emitter;
   detecting the structured light after the structured light is reflected by the exterior surface; and
   calculating at least one characteristic of the detected structured light.
2. The method of clause 1, wherein the at least one characteristic is a distance between a first structured light fiducial and a second structured light fiducial.
3. The method of clause 1, wherein the at least one characteristic is a shape of a structured light fiducial.
4. The method of clause 1, wherein the structured light is a laser light.
5. The method of clause 1, wherein the structured light is white light.
6. The method of clause 1, wherein the structured light is blue light.
7. The method of clause 1, wherein the projecting and detecting steps are performed with the component in situ.
8. The method of clause 1, wherein the projecting and detecting steps are performed during rotation of the component.
9.The method of clause 8, wherein the detecting step is performed at a predetermined interval.
10. The method of clause 9, wherein the predetermined interval corresponds to a rotational frequency of the component.
11. The method of clause 10, wherein the rotational frequency is between 3000 revolutions per minute and 5000 revolutions per minute.
12. The method of clause 1, wherein the component is a turbine component.
13. A system for monitoring a component, the component has an exterior surface, the system comprising:
   a data acquisition device, the data acquisition device comprising a structured light emitter and a detector, the data acquisition device configured for:
      projecting structured light onto a predetermined location on the exterior surface of the component; and
      detecting the structured light after the structured light is reflected by the exterior surface; and
   a computing device in operable communication with the data acquisition device, the computing device configured for:
      calculating at least one characteristic of the detected structured light.
14. The system of clause 13, wherein the data acquisition device is a laser scanner and the structure light is laser light.
15. The system of clause 13, wherein the data acquisition device is structured light scanner.
16. The system of clause 15, wherein the structured light is blue light.
17. The system of clause 15, wherein the structured light is white light.
18. The system of clause 13, wherein the data acquisition device is configured for detecting the structured light at a predetermined interval.
19. The system of clause 18, wherein the predetermined interval corresponds to a rotational frequency of the component, and wherein the component is a turbine component.
20. The system of clause 19, wherein the rotational frequency is between 3000 revolutions per minute and 5000 revolutions per minute.

## Claims

1. A method (200) for monitoring a component (10), the component (10) having an exterior surface (11), the method (200) comprising:
projecting structured light (146) onto a predetermined location (148) on the exterior surface (11) of the component (10), the structured light (146) emitted from a structured light (146) emitter (142);
detecting the structured light (146) after the structured light (146) is reflected by the exterior surface (11); and
calculating at least one characteristic of the detected structured light (146).

2. The method (200) of claim 1, wherein the at least one characteristic is a distance between a first structured light fiducial (20) and a second structured light fiducial (20).

3. The method (200) of claim 1, wherein the at least one characteristic is a shape of a structured light fiducial (20).

4. The method (200) of claim 1, wherein the projecting and detecting steps (210, 220, 230) are performed with the component (10) in situ.

5. The method (200) of claim 1, wherein the projecting and detecting steps (210, 220, 230) are performed during rotation of the component (10).

6. The method (200) of claim 5, wherein the detecting step (210, 220, 230) is performed at a predetermined interval.

7. The method (200) of claim 6, wherein the predetermined interval corresponds to a rotational frequency of the component (10).

8. The method (200) of claim 7, wherein the rotational frequency is between 3000 revolutions per minute and 5000 revolutions per minute.

9. The method (200) of any preceding claims, wherein the component (10) is a turbine component (10).

10. A system (150) for monitoring a component (10), the component (10) has an exterior surface (11), the system (150) comprising:
a data acquisition device (140), the data acquisition device (140) comprising a structured light (146) emitter (142) and a detector (144), the data acquisition device (140) configured for:
projecting structured light (146) onto a predetermined location (148) on the exterior surface (11) of the component (10); and
detecting the structured light (146) after the structured light (146) is reflected by the exterior surface (11); and
a computing device (152) in operable communication with the data acquisition device (140), the computing device (152) configured for:
calculating at least one characteristic of the detected structured light (146).

11. The system (150) of claim 10, wherein the data acquisition device (140) is a laser scanner (142) and the structure light (146) is laser light.

12. The system of claim 10, wherein the data acquisition device (140) is structured light (146) scanner (142).

13. The system (150) of any of claims 10 to 12, wherein the data acquisition device (140) is configured for detecting the structured light (146) at a predetermined interval.

14. The system (150) of claim 13, wherein the predetermined interval corresponds to a rotational frequency of the component (10), and wherein the component (10) is a turbine component (10).

15. The system (150) of claim 14, wherein the rotational frequency is between 3000 revolutions per minute and 5000 revolutions per minute.
